# DEMANDE DE BREVET EUROPEEN

(11) **EP 4 684 954 A1**
(43) Date de publication de la demande: **28.01.2026**
(21) Numéro de dépôt: 25187305.5
(22) Date de dépôt: 03.07.2025
(51) Int. Cl.: B32B 3/02, B32B 3/04, B32B 3/08, B32B 3/12, B32B 27/08, B32B 27/32

(54) **PANNEAU POUR LE COFFRAGE DE BETON**

(30) Priorité: 26.07.2024 FR 2408328
(71) Demandeur: ALPHI, 73420 Mery (FR)
(72) Inventeur: PERROTIN, Pascal, 73100 AIX LES BAINS (FR); PEETERS, Simon, 73410 LA BIOLLE (FR); PHILIPPE, Sébastien, 73100 AIX LES BAINS (FR); POINARD, Cédric, 73000 JACOB BELCOMBETTE (FR); SOUVIGNET, Alexandre, 73100 PUGNY CHATENOD (FR)
(74) Mandataire: Cabinet Poncet

(57) **Abrégé**

Panneau (2) pour le coffrage de béton, notamment pour le coffrage de dalle en béton, comportant :
- une plaque alvéolée (1) en matière plastique comprenant une première couche (1a) s'étendant selon un premier plan (P1) et une deuxième couche (1b) s'étendant selon un deuxième plan (P2) parallèle au premier plan (P1), les première (1a) et deuxième (1b) couches étant reliées l'une à l'autre par des parois s'étendant perpendiculairement aux premier (P1) et deuxième (P2) plans et formant des alvéoles,
- une bordure périphérique (5) recouvrant tout le chant périphérique de la plaque alvéolée (1), ladite bordure périphérique (5) étant fabriquée en un élastomère thermoplastique de dureté inférieure à la dureté des première (1a) et deuxième (1b) couches de la plaque alvéolée (1).

## Description

### DOMAINE TECHNIQUE DE L'INVENTION

La présente invention concerne le domaine de la construction, et concerne plus particulièrement un panneau pour le coffrage de béton.

Pour coffrer du béton, en particulier pour la fabrication de dalles en béton, on utilise des structures de soutien d'un coffrage de dalle ou analogue telles que décrites dans les documents FR 2 900 176 B1 et FR 2 923 241 B1. Sur de telles structures sont généralement disposés des panneaux contreplaqués en bois destinés à former une surface horizontale lisse et continue sur laquelle est versé le béton à l'état liquide.

Après montée en résistance du béton, la structure de soutien d'un coffrage de dalle ou analogue et les panneaux contreplaqués en bois sont retirés pour être réutilisés pour coffrer une autre dalle de béton ou analogue.

Au fur et à mesure de leur réutilisation, les panneaux contreplaqués en bois subissent des chocs qui endommagent leur chant périphérique au point où il n'est parfois plus possible d'assurer une continuité de surface suffisante entre deux panneaux contreplaqués en bois adjacents. Les panneaux contreplaqués en bois sont alors mis au rebut mais ne peuvent hélas pas être aisément recyclés en raison de la colle qu'ils contiennent, ainsi qu'en raison du vernis phénolique qui recouvre leurs faces principales pour limiter leur adhérence au béton après montée en résistance. En outre, les panneaux contreplaqués en bois présentent un poids élevé qui rend le travail des opérateurs très pénible.

Le document FR 2 679 582 A1 décrit un panneau composite pour le coffrage du béton. Ce panneau en matière synthétique comprend un noyau plan alvéolaire en polypropylène, muni sur ses faces d'une couche comprenant une ou plusieurs strates de tissu de verre imprégnée(s) de résine époxy. Le chant périphérique du noyau plan alvéolaire est entouré par un cadre périphérique en bois permettant de rigidifier le panneau composite. Il est également prévu un revêtement de protection et de démoulage recouvrant une partie du chant périphérique du cadre périphérique en bois.

Ce panneau composite sous forme de sandwich comporte ainsi de multiples matériaux de natures très différentes, et sa cohésion est principalement assurée par une résine de stratification rendant très difficile -voire impossible- la séparation des différents matériaux. Il est ainsi impossible de recycler un tel panneau à un coût raisonnable.

### EXPOSE DE L'INVENTION

Un problème proposé par la présente invention est de fournir un panneau pour le coffrage de béton qui soit plus aisé à manutentionner et plus facile à recycler, tout en limitant les risques d'endommagement du chant périphérique dudit panneau.

Pour atteindre ces objets ainsi que d'autres, l'invention propose un panneau pour le coffrage de béton selon la revendication 1.

La plaque alvéolée procure à la fois rigidité et légèreté, tandis que la bordure périphérique protège le chant périphérique de la plaque alvéolée et procure une continuité satisfaisante avec un panneau adjacent. La dureté plus réduite de la bordure périphérique autorise une déformation réversible et préférentielle de celle-ci, ce qui permet de limiter les risques d'endommager la plaque alvéolée lors de la manipulation du panneau pour le coffrage de béton.

La bordure périphérique est directement fixée à la plaque alvéolée. La bordure périphérique s'étend ainsi radialement depuis et à l'écart de la plaque alvéolée et y est fixée de façon fiable, robuste et ne nécessitant pas l'ajout d'une matière de liaison polluante.

Un tel panneau présente également un nombre très réduit de composants et de matières constitutives, et peut présenter une structure très simple (de préférence constituée par la plaque alvéolée et la bordure périphérique), ce qui simplifie sa fabrication et facilite son recyclage.

Avantageusement, la plaque alvéolée peut être en polypropylène, qui est un matériau à coût raisonnable et est aisément recyclable.

De préférence, la bordure périphérique peut être fabriquée en un élastomère thermoplastique à base de polyoléfines. Là encore il s'agit d'un matériau à coût raisonnable et qui est aisément recyclable.

Il doit être noté que lorsque la plaque alvéolée est en polypropylène et que la bordure périphérique est fabriquée en un élastomère thermoplastique à base de polyoléfines, le panneau pour le coffrage de béton peut être aisément recyclé sans avoir à séparer la plaque alvéolée de la bordure périphérique. On peut ainsi procéder à un recyclage du panneau pour le coffrage de béton en broyant celui-ci d'un seul tenant et en réutilisant le broyat sans avoir à effecteur de tri séparatif des matériaux.

Avantageusement, la bordure périphérique peut présenter une dureté comprise entre 50 Shore A et 90 Shore A. Une dureté inférieure à 50 Shore A rend très difficile la fabrication de la bordure périphérique par un procédé d'injection, et une dureté supérieure à 90 Shore A est trop élevée pour une déformabilité suffisante de la bordure périphérique en vue de bien protéger la plaque alvéolée. La dureté est mesurée à une température normale de laboratoire (23°C à plus ou moins 2°C).

De préférence, sur chaque côté de la plaque alvéolée, le matériau constituant la bordure périphérique remplit au moins partiellement une pluralité d'alvéoles. Un tel remplissage procure une solidarisation fiable de la bordure périphérique le long de chaque côté de la plaque alvéolée. En effet, il est ainsi procuré une liaison directe et forte entre la bordure périphérique et la plaque alvéolée par une liaison physico-chimique (chimique par l'adhérence entre les matières constitutives de la plaque alvéolée et de la bordure périphérique, et physique par une retenue de la bordure périphérique par le biais de sa matière constitutive pénétrant dans une pluralité d'alvéoles).

Les alvéoles peuvent avantageusement se présenter selon une disposition en quinconce et/ou comporter chacune un contour fermé (par exemple hexagonal ou sensiblement circulaire) procurant des volumes à contre-dépouille le long d'au moins un côté de la plaque alvéolée, et de préférence le long de plusieurs côtés de la plaque alvéolée. Les alvéoles peuvent pour ce faire former une structure en nid d'abeilles. Des volumes à contre-dépouille permettent d'augmenter l'aspect physique de la liaison entre la bordure périphérique et la plaque alvéolée : une partie de la matière constitutive de la bordure périphérique est mécaniquement retenue captive dans des alvéoles.

De préférence, la bordure périphérique peut s'étendre radialement à l'écart de la plaque alvéolée selon une distance comprise entre 5 mm et 15 mm. La bordure périphérique, qui a de préférence une épaisseur égale à l'épaisseur du panneau, procure ainsi des capacités d'amortissement satisfaisantes des chocs par déformation élastique.

Avantageusement, la première couche et/ou la deuxième couche peuvent comporter une charge minérale, de préférence du talc. Une telle charge minérale permet d'augmenter les propriétés mécaniques de la plaque alvéolée.

De préférence, la première couche et/ou la deuxième couche peuvent comporter une charge fibreuse, de préférence de la fibre de verre. Une telle charge fibreuse permet d'augmenter la rigidité de la plaque alvéolée, en particulier pour limiter les risques de flèche excessive sous le poids du béton.

Avantageusement, le panneau peut présenter une épaisseur comprise entre 9 mm et 30 mm. Une telle épaisseur peut être égale à l'épaisseur habituelle de panneaux contreplaqués en bois disposés de façon adjacente et pourvus de lumières traversantes pour ménager des passages techniques dans le béton coffré.

De préférence, les première et deuxième couches de la plaque alvéolée peuvent présenter chacune une épaisseur comprise entre 0,8 mm et 1,5 mm.

Avantageusement, la bordure périphérique peut comporter un support de données d'identification, de préférence inclus dans la bordure périphérique, apte à communiquer avec un dispositif lecteur de données. Ledit support de données d'identification peut être de préférence de type RFID ou NFC. Un tel support de données procure une identification fiable du panneau, permettant un suivi du panneau (entrée en stock, sortie du stock, etc.) en vue d'évaluer son état d'usure possible. Le fait d'inclure ledit support de données dans la bordure périphérique, en particulier lors d'une injection de ladite bordure périphérique, permet de le rendre inséparable du panneau et de ne pas détériorer la plaque alvéolée.

Selon un autre aspect de la présente invention, il est proposé un procédé de fabrication d'un panneau tel que précédemment décrit ; lors dudit procédé de fabrication, la matière constitutive de la bordure périphérique peut être injectée à chaud sous pression dans un espace ménagé entre un moule et le chant périphérique de la plaque alvéolée.

Un tel procédé d'injection permet de créer une adhérence forte entre la plaque alvéolée et la bordure périphérique, pour limiter efficacement tout risque de séparation.

En adaptant la température et/ou la pression de la matière constitutive de la bordure périphérique lors de son injection, on peut favoriser une traversée d'une partie des parois des alvéoles par la matière constitutive de la bordure périphérique. La matière constitutive de la bordure périphérique peut ainsi remplir au moins partiellement des alvéoles faisant partie d'un rang d'alvéoles situé au-delà du rang d'alvéoles immédiatement adjacent aux côtés.

De très bon résultats ont été obtenus en prévoyant que :
- la plaque alvéolée est en polypropylène,
- la matière constitutive de la bordure périphérique est un élastomère thermoplastique à base de polyoléfines, mais de préférence à l'exclusion des élastomères thermoplastiques à base de polyuréthane, et des élastomères thermoplastiques à base de styrène.

Lors du procédé de fabrication, on peut avantageusement refroidir le moule pendant l'injection de l'élastomère thermoplastique, de préférence par fluide. Un tel refroidissement permet de limiter les risques de déformation des première et deuxième couches de la plaque alvéolée.

Lors du procédé de fabrication, le support de données d'identification peut être de préférence placé dans l'espace compris entre le chant périphérique de la plaque alvéolée et le moule d'injection avant injection de la matière constitutive de la bordure périphérique. Le support de données d'identification est ainsi noyé dans la matière constitutive de la bordure périphérique, pour rendre le support de données d'identification inséparable de la bordure périphérique (et du panneau) et également indécelable visuellement.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est vue schématique en perspective d'une plaque alvéolée utilisée pour la fabrication d'un mode de réalisation particulier de panneau selon la présente invention ;
[Fig.2] La figure 2 est une vue partielle et de dessus de la plaque alvéolée de la figure 1 ;
[Fig.3] La figure 3 est une vue partielle et de côté de la plaque alvéolée de la figure 1 ;
[Fig.4] La figure 4 est une vue de dessus illustrant partiellement la disposition de de la plaque alvéolée de la figure 1 dans un moule d'injection ;
[Fig.5] La figure 5 est une vue de dessus d'un panneau comprenant la plaque alvéolée de la figure 1 dans ledit moule d'injection après injection d'une bordure périphérique ;
[Fig.6] La figure 6 est une vue en coupe partielle du panneau de la figure 5 ; et
[Fig.7] La figure 7 est une vue en perspective d'un panneau selon un mode de réalisation particulier de la présente invention ;
[Fig.8] La figure 8 est une vue en perspective et de détail du panneau de la figure 7.

### DESCRIPTION DES MODES DE REALISATION PREFERES

Lorsque des références numériques identiques sont utilisées dans plusieurs figures, modes de réalisation ou variantes de l'invention, ces références numériques désignent des éléments identiques ou similaires dans chacun(e) des figures, modes de réalisation ou variantes.

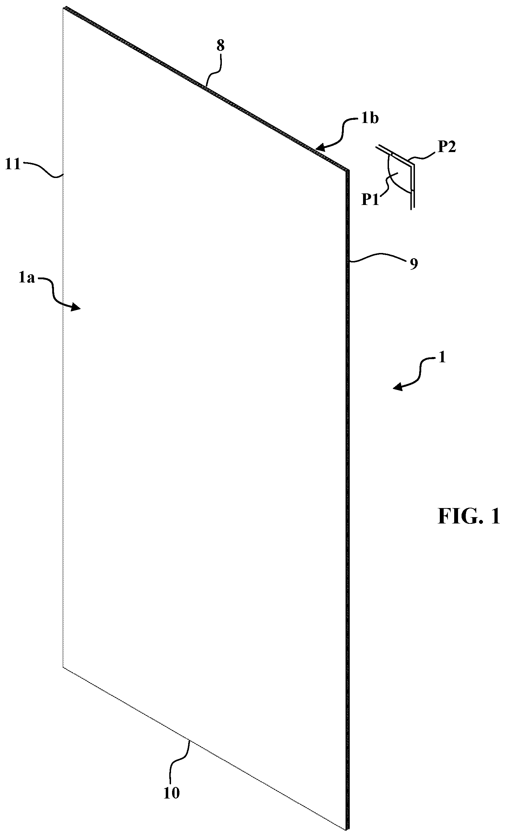

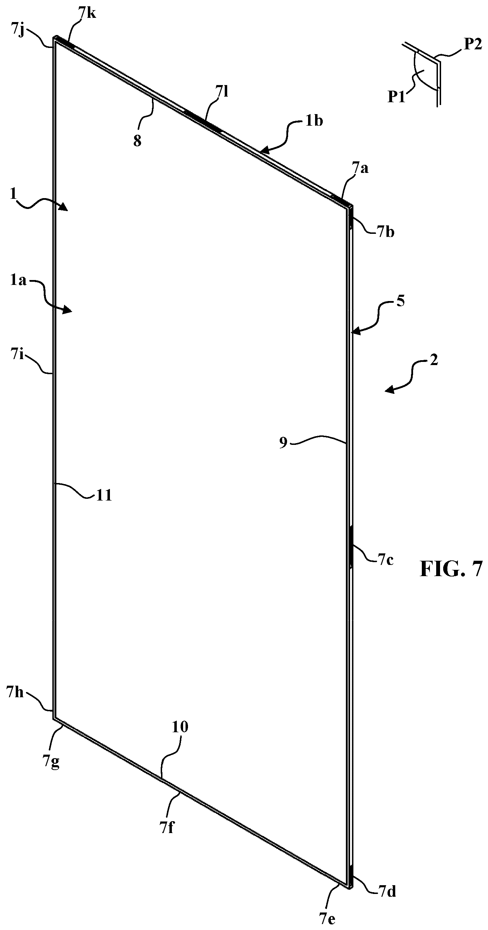

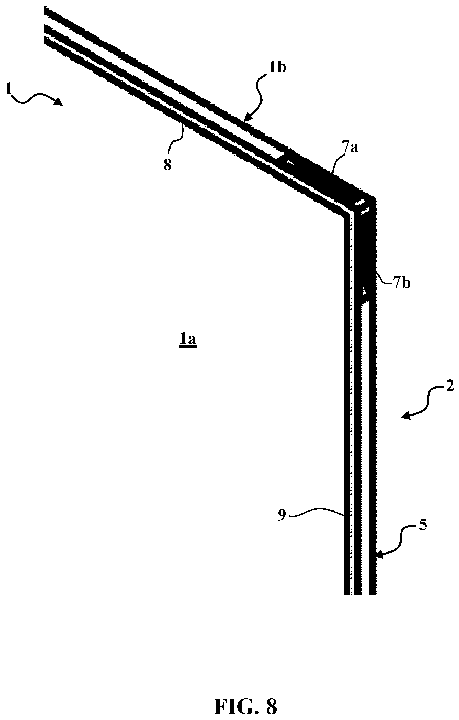

Sur les figures 1 à 3 est illustrée une plaque alvéolée 1 destinée à être utilisée pour la fabrication d'un panneau 2 selon l'invention (figures 7 et 8) pour le coffrage de béton, notamment pour le coffrage de dalle en béton. La plaque alvéolée 1 présente une forme rectangulaire à quatre côtés 8 à 11 et peut notamment être obtenue par le procédé de fabrication décrit dans le document WO 2006/053407 A1 par exemple.

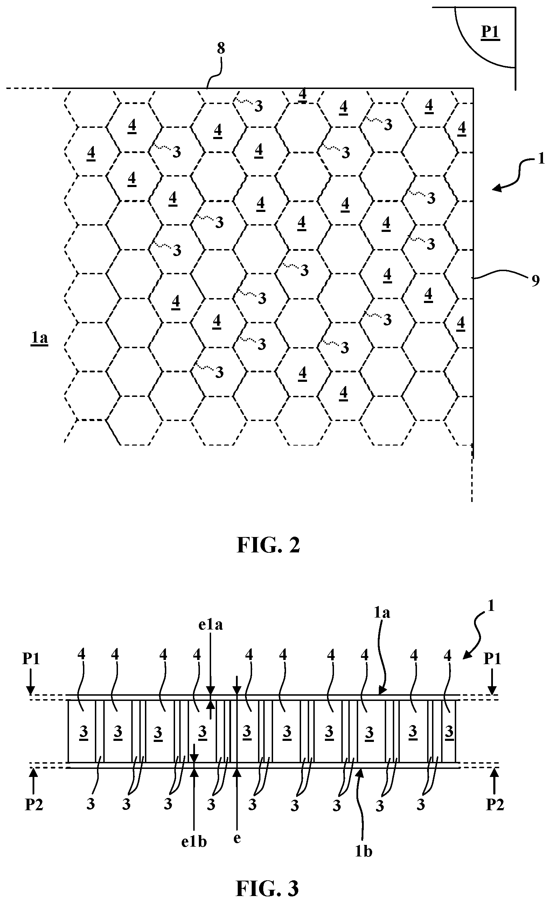

La plaque alvéolée 1 est en matière plastique (en polypropylène par exemple) et comprend une première couche 1a s'étendant selon un premier plan P1 et une deuxième couche 1b s'étendant selon un deuxième plan P2 parallèle au premier plan P1 (figure 3). Les première 1a et deuxième 1b couches sont reliées l'une à l'autre par des parois 3 s'étendant perpendiculairement aux premier P1 et deuxième P2 plans et formant des alvéoles 4.

Sur la figure 2, les parois 3 et alvéoles 4 sont illustrées en pointillés car elles sont cachées par la première couche 1a. Sur les figures, une partie seulement des parois et alvéoles sont identifiées par les références numériques 3 et 4 pour ne pas nuire à la compréhension du lecteur.

Les alvéoles 4 se présentent selon une disposition en quinconce. Elles comportent chacune un contour fermé qui est ici hexagonal (on pourrait toutefois envisager d'autres formes de contour, circulaire par exemple).

Ici, les alvéoles 4 forment une structure en nid d'abeilles.

Outre une plaque alvéolée 1, le panneau 2 selon l'invention (figures 7 et 8) comporte une bordure périphérique 5 recouvrant tout le chant périphérique de la plaque alvéolée 1. La bordure périphérique 5 est fabriquée en un élastomère thermoplastique de dureté inférieure à la dureté des première 1a et deuxième 1b couches de la plaque alvéolée 1.

De façon préférentielle, la bordure périphérique 5 est fabriquée en un élastomère thermoplastique à base de polyoléfines (mais de préférence à l'exclusion des élastomères thermoplastiques à base de polyuréthane, et des élastomères thermoplastiques à base de styrène), tandis que la plaque alvéolée 1 est en polypropylène.

La bordure périphérique 5 présente une dureté comprise entre 50 Shore A et 90 Shore A, pour assurer un bon compromis entre injectabilité du matériau constitutif de la bordure périphérique 5 et déformabilité de la bordure périphérique 5 pour protéger de façon satisfaisante la plaque alvéolée 1 contre les chocs. La mesure de dureté est effectuée à une température normale de laboratoire (23°C à plus ou moins 2°C).

La bordure périphérique 5 est directement fixée à la plaque alvéolée 1. La bordure périphérique 5 s'étend ainsi radialement depuis et à l'écart de la plaque alvéolée 1 et y est fixée de façon fiable, robuste et ne nécessitant pas l'ajout d'une matière de liaison polluante.

Le panneau 2 présente un nombre très réduit de composants et de matières constitutives, et peut présenter une structure très simple, en particulier lorsqu'il est constitué par la plaque alvéolée 1 et la bordure périphérique 5, ce qui simplifie sa fabrication et facilite son recyclage.

Pour augmenter les propriétés mécaniques de la plaque alvéolée 1, la première couche 1a et/ou la deuxième couche 1b comportent une charge minérale, de préférence du talc.

Pour augmenter la rigidité de la plaque alvéolée 1, en particulier pour limiter les risques de flèche excessive sous le poids du béton, la première couche 1a et/ou la deuxième couche 1b comportent une charge fibreuse, de préférence de la fibre de verre.

Comme il est mieux visible sur la figure 3, la plaque alvéolée 1 présente une épaisseur e (qui est la même que celle de la bordure périphérique 5 et donc du panneau 2) comprise entre 9 mm et 30 mm.

Les première 1a et deuxième 1b couches de la plaque alvéolée 1 présentent quant à elles une épaisseur respective e1a et e1b comprise entre 0,8 mm et 1,5 mm. Les épaisseurs e1a et e1b sont de préférence égales.

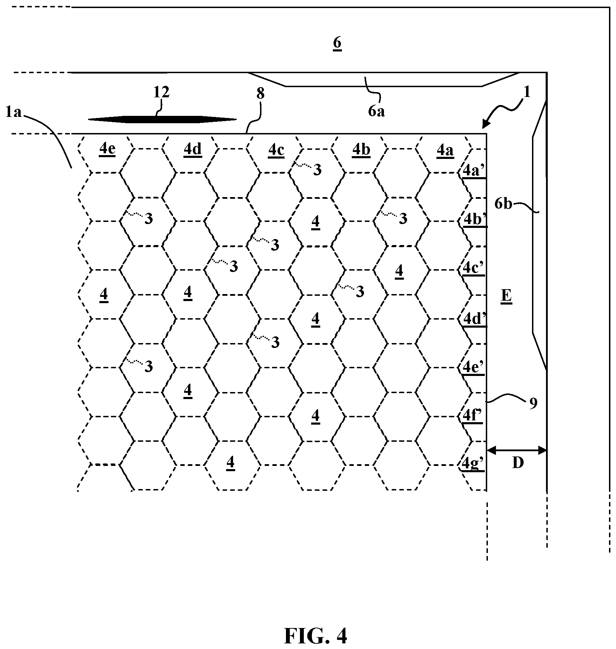

La fabrication du panneau 2 est plus particulièrement illustrée sur les figures 4 à 6.

Comme illustré sur la figure 4, on place la plaque alvéolée 1 dans un moule 6 qui entoure le chant périphérique de la plaque alvéolée 1. On conserve un espace E en périphérie du chant périphérique de la plaque alvéolée 1.

L'espace E s'étend radialement à l'écart de la plaque alvéolée 1 selon une distance D comprise entre 5 mm et 15 mm, et la plaque alvéolée 1 présente une épaisseur d'au moins 7 mm. La bordure périphérique 5 présente ainsi une section transversale d'au moins 5 mm X 7 mm le long des côtés 8 à 11 de la plaque alvéolée 1.

Le moule 6 comporte des ergots 6a et 6b, faisant saillie en direction du chant périphérique de la plaque alvéolée 1, et destinés à créer des rainures 7a et 7b (figure 7) permettant une préhension du panneau 2 par un outil pour tirer le panneau 2 afin de le décoller du béton après solidification (montée en résistance).

Du fait de la découpe du contour de la plaque alvéolée 1 :
- le long du côté 8 de la plaque alvéolée 1, une alvéole 4 sur deux (à savoir les alvéoles 4a à 4e) présente une section transversale (selon un plan intermédiaire aux premier P1 et deuxième P2 plans) ouverte sur le chant périphérique de la plaque alvéolée 1 et présentant des contre-dépouilles,
- le long du côté 9 de la plaque alvéolée 1, toutes les alvéoles 4 (ici 4a' à 4g') présentent une section transversale (selon un plan intermédiaire aux premier P1 et deuxième P2 plans) ouverte sur le chant périphérique de la plaque alvéolée 1 mais ne présentant pas de contre-dépouilles.

Les alvéoles 4 le long du côté 10 (opposé au côté 8 sur la figure 1) ont une configuration similaire à celle des alvéoles le long du côté 8. Les alvéoles le long du côté 11 (opposé au côté 9 sur la figure 1) ont une configuration similaire à celle des alvéoles le long du côté 9.

Il doit être noté que la présence ou l'absence de contre-dépouilles dans les alvéoles 4 dépend de la position et de l'orientation relatives des lignes de découpe pratiquées pour découper la plaque alvéolée 1 par rapport à la structure formée par les alvéoles 4.

Optionnellement, un support de données d'identification 12 (de préférence de type RFID ou NFC) est placé dans l'espace E compris entre le chant périphérique de la plaque alvéolée 1 et le moule 6 d'injection avant injection de la matière constitutive de la bordure périphérique 5.

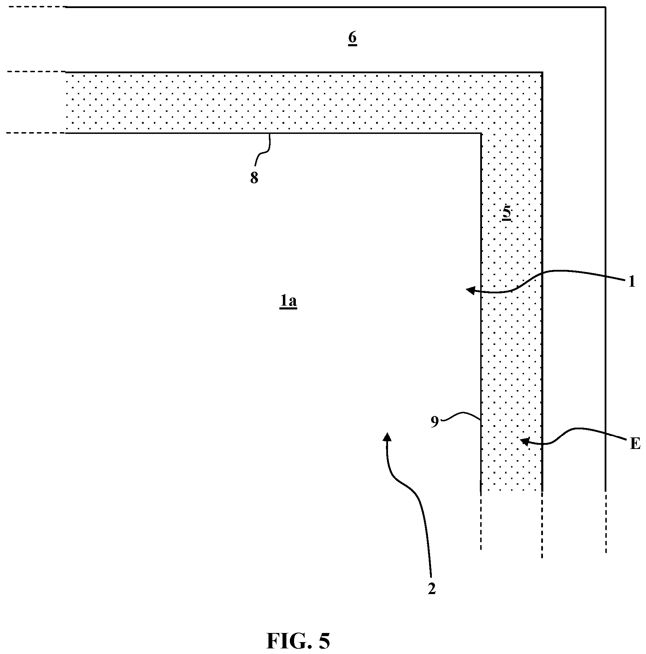

Après fermeture du moule 6, la matière (élastomère thermoplastique) constitutive de la bordure périphérique 5 est injectée à chaud sous pression dans le moule 6, et plus spécifiquement dans l'espace E ménagé entre le moule 6 et le chant périphérique de la plaque alvéolée 1. La matière constitutive de la bordure périphérique 5 remplit alors l'espace E (figure 5).

Sous l'effet de la chaleur, il se créé une adhérence forte de la bordure périphérique 5 à la première couche 1a et/ou à la deuxième couche 1b et/ou aux parois 3 des alvéoles 4.

Le moule 6 est de préférence refroidi par fluide pendant l'injection de l'élastomère thermoplastique, afin de limiter les risques de déformation des première 1a et deuxième 1b couches de la plaque alvéolée 1.

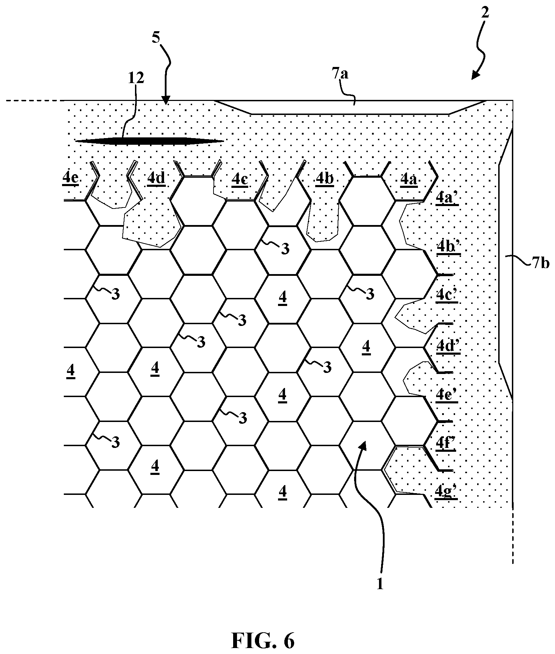

La figure 6 est une vue en coupe et de dessus d'un panneau 2 après injection de la bordure périphérique 5, ladite coupe étant effectuée selon un plan intermédiaire entre les premier P1 et deuxième P2 plans.

On constate sur cette figure que, sur chaque côté de la plaque alvéolée 1, le matériau constituant la bordure périphérique 5 remplit au moins partiellement une pluralité d'alvéoles 4.

De façon plus spécifique, on voit sur la figure 6 que la matière constitutive de la bordure périphérique 5 a notamment :
- rempli les alvéoles 4a et 4e sans affecter les parois 3 de ces dernières,
- fondu des parois 3 des alvéoles 4b, 4c et 4d et a au moins partiellement rempli des alvéoles 4 adjacentes dans lesquelles la matière constitutive de la bordure périphérique 5 forme après solidification des formes en contre-dépouilles,
- fondu la moitié des parois des alvéoles 4a' et 4b',
- fondu des parois 3 des alvéoles 4c', 4e' et 4g' et a au moins partiellement rempli des alvéoles 4 adjacentes dans lesquelles la matière constitutive de la bordure périphérique 5 forme après solidification des formes en contre-dépouilles.

Les contre-dépouilles formées par la bordure périphérique 5 dans des alvéoles 4 procurent un ancrage très résistant de la bordure périphérique 5 à la plaque alvéolée 1.

En adaptant la température et/ou la pression de la matière constitutive de la bordure périphérique 5 lors de son injection, on peut favoriser une traversée d'une partie des parois 3 par la matière constitutive de la bordure périphérique 5. La matière constitutive de la bordure périphérique 5 peut ainsi remplir au moins partiellement des alvéoles 4 d'un rang d'alvéoles 4 situé au-delà du rang d'alvéoles immédiatement adjacent aux côtés 8 à 11. Il convient néanmoins de ne pas choisir une température et/ou une pression trop élevée pour ne pas endommager excessivement la structure alvéolée de la plaque alvéolée 1 et pour ne pas déformer les première 1a et deuxième 1b couches qui doivent demeurer les plus planes possible.

On voit également sur la figure 6 que les ergots 6a et 6b ont permis de créer des rainures 7a et 7b permettant une préhension du panneau 2 par un outil pour tirer le panneau 2 afin de le décoller du béton après solidification. D'autres rainures 7c à 7l ont été ménagées dans la bordure périphérique 5 (figure 7) de manière similaire.

Le support de données d'identification 12 est noyé dans la matière constitutive de la bordure périphérique 5 et est de ce fait invisible et inséparable de la bordure périphérique 5 et du panneau 2.

Le panneau 2 obtenu (figure 7) est à la fois léger, offre une rigidité suffisante pour supporter du béton lors d'un coffrage (d'une dalle notamment), et présente une bonne durabilité en raison de sa bordure périphérique 5 en élastomère thermoplastique.

La présente invention n'est pas limitée aux modes de réalisation qui ont été explicitement décrits, mais elle en inclut les diverses variantes et généralisations contenues dans la portée des revendications ci-après.

## Revendications

1. Panneau (2) pour le coffrage de béton, notamment pour le coffrage de dalle en béton, comportant :
- une plaque alvéolée (1) comprenant une première couche (1a) s'étendant selon un premier plan (P1) et une deuxième couche (1b) s'étendant selon un deuxième plan (P2) parallèle au premier plan (P1), les première (1a) et deuxième (1b) couches étant reliées l'une à l'autre par des parois (3) s'étendant perpendiculairement aux premier (P1) et deuxième (P2) plans et formant des alvéoles (4),
**caractérisé en ce que** :
- la plaque alvéolée (1) est en matière plastique,
- une bordure périphérique (5) recouvre tout le chant périphérique de la plaque alvéolée (1), ladite bordure périphérique (5) étant fabriquée en un élastomère thermoplastique de dureté inférieure à la dureté des première (1a) et deuxième (1b) couches en matière plastique de la plaque alvéolée (1), et ladite bordure périphérique (5) étant directement fixée à la plaque alvéolée (1).

2. Panneau (2) selon la revendication 1, **caractérisé en ce que** la plaque alvéolée (1) est en polypropylène.

3. Panneau (2) selon l'une des revendications 1 ou 2, **caractérisé en ce que** la bordure périphérique (5) est fabriquée en un élastomère thermoplastique à base de polyoléfines.

4. Panneau (2) selon l'une quelconque des revendications 1 à 3, **caractérisé en ce que** la bordure périphérique (5) présente une dureté comprise entre 50 Shore A et 90 Shore A.

5. Panneau (2) selon l'une quelconque des revendications 1 à 4, **caractérisé en ce que**, sur chaque côté de la plaque alvéolée (1), le matériau constituant la bordure périphérique (5) remplit au moins partiellement une pluralité d'alvéoles (4).

6. Panneau (2) selon l'une quelconque des revendications 1 à 5, **caractérisé en ce que** la bordure périphérique (5) s'étend radialement à l'écart de la plaque alvéolée (1) selon une distance (D) comprise entre 5 mm et 15 mm.

7. Panneau (2) selon l'une quelconque des revendications 1 à 6, **caractérisé en ce que** la première couche (1a) et/ou la deuxième couche (1b) comportent une charge minérale, de préférence du talc.

8. Panneau (2) selon l'une quelconque des revendications 1 à 7, **caractérisé en ce que** la première couche (1a) et/ou la deuxième couche (1b) comportent une charge fibreuse, de préférence de la fibre de verre.

9. Panneau (2) selon l'une quelconque des revendications 1 à 8, **caractérisé en ce que** le panneau (2) présente une épaisseur (e) comprise entre 9 mm et 30 mm.

10. Panneau (2) selon l'une quelconque des revendications 1 à 9, **caractérisé en ce que** les première (1a) et deuxième (1b) couches de la plaque alvéolée (1) présentent chacune une épaisseur (e1a, e1b) comprise entre 0,8 mm et 1,5 mm.

11. Panneau (2) selon l'une quelconque des revendications 1 à 10, **caractérisé en ce que** la bordure périphérique (5) comporte un support de données d'identification (12), de préférence inclus dans la bordure périphérique (5), apte à communiquer avec un dispositif lecteur de données, ledit support de données d'identification (12) étant de préférence de type RFID ou NFC.

12. Procédé de fabrication d'un panneau (2) selon l'une quelconque des revendications 1 à 11, lors duquel la matière constitutive de la bordure périphérique (5) est injectée à chaud sous pression dans un espace (E) ménagé entre un moule (6) et le chant périphérique de la plaque alvéolée (1).

13. Procédé de fabrication selon la revendication 12, lors duquel l'élastomère thermoplastique est injecté à une température et à une pression choisies de façon que l'élastomère thermoplastique remplit au moins partiellement des alvéoles (4) faisant partie d'un rang d'alvéoles (4) situé au-delà d'un rang d'alvéoles (4) immédiatement adjacent à des côtés (8-11) périphériques de la plaque alvéolée (1).

14. Procédé de fabrication selon l'une des revendications 12 ou 13, lors duquel :
- la plaque alvéolée (1) est en polypropylène,
- la matière constitutive de la bordure périphérique (5) est un élastomère thermoplastique à base de polyoléfines, mais de préférence à l'exclusion des élastomères thermoplastiques à base de polyuréthane, et des élastomères thermoplastiques à base de styrène.

15. Procédé de fabrication selon l'une quelconque des revendications 12 à 14, lors duquel on refroidit le moule (6) pendant l'injection de l'élastomère thermoplastique, de préférence par fluide.

16. Procédé de fabrication selon l'une quelconque des revendications 12 à 15 pour la fabrication d'un panneau (2) selon la revendication 11, **caractérisé en ce que** le support de données d'identification (12) est placé dans l'espace (E) compris entre le chant périphérique de la plaque alvéolée (1) et le moule (6) d'injection avant injection de la matière constitutive de la bordure périphérique (5).
